# FASCICULE DE BREVET EUROPEEN

(11) **EP 1 291 543 B1**
(45) Date de publication et mention de la délivrance du brevet: **09.11.2005**
(21) Numéro de dépôt: 02291961.7
(22) Date de dépôt: 02.08.2002
(51) Int. Cl.: F16F 1/38

(54) **Ensemble anti-vibratoire et support anti-vibratoire faisant partie de cet ensemble**
Schwingungsdämpfende Anordnung und schwingungsdämpfendes Lager, Teil davon
Anti-vibration assembly and component damping mount

(30) Priorité: 05.09.2001 FR 0111475
(43) Date de publication de la demande: 12.03.2003
(73) Titulaire: HUTCHINSON, 75008 Paris (FR)
(72) Inventeur: Chenais, Gilles, 28200 Marboue (FR); Salembier, Vincent, 28400 Brunelles (FR); Coudiere, Franck, 45190 Cravant (FR); Garaud, Patrick, 28200 St-Denis les Ponts (FR)
(74) Mandataire: Bérogin, Francis

(56) Documents cités:
- DE-A- 3 437 784
- DE-A- 19 854 559
- FR-A- 2 789 464
- US-A- 5 195 717
- US-A- 6 000 672

## Description

L'invention concerne les ensembles anti-vibratolres et leur procédé de montage.

Plus particulièrement, l'invention concerne un ensemble anti-vibratoire comprenant des premier et deuxième éléments rigides et un support anti-vibratoire pour réunir ces deux éléments, amortir des vibrations entre ces deux éléments et supporter une charge selon une première direction verticale, le support comportant lui même :
- deux armatures rigides respectivement intérieure et extérieure, adaptées pour être reliées respectivement avec les premier et deuxième éléments rigides, l'armature extérieure formant un caisson ayant une forme annulaire entourant l'armature intérieure (dans le présent texte, le qualificatif "annulaire" ne correspond pas uniquement à une forme circulaire, mais à toute forme fermée sur elle-même similaire à un anneau) et comportant un passage traversé par l'armature intérieure, et
- un corps en élastomère assurant une liaison entre l'armature intérieure et l'armature extérieure.

On connaît des ensembles anti-vibratoires de ce type comportant un support anti-vibratoire, notam ment tel que celui décrit dans le document FR 2.789.464. Dans de tels ensembles, les premier et deuxième éléments rigides sont constitués respectivement par un moteur et une caisse de véhicule, les armatures intérieure et extérieure sont sensiblement concentriques, avec le corps en élastomère entre les deux ; l'armature extérieure est soutenue verticalement, éventuellement par l'intermédiaire d'une console d'intercon nexion, à la caisse ; et le moteur est fixé à l'armature intérieure, par une vis axiale verticale située sensiblement au centre du corps en élastomère. Le moteur est donc supporté élastiquement sur l'armature extérieure en un point d'ancrage relativement éloigné de la caisse. Le document DE 19854559 divulgue un ensemble anti-vibratoire du type présenté en préambule de la revendication 1.

De tels ensembles donnent entière satisfaction, mais Il arrive que l'on souhaite encore augmenter leur efficacité à amortir des vibrations.

Un but de la présente invention est de fournir un ensemble anti-vibratoire permettant de satisfaire ce souhait.

A cet effet, l'invention propose un ensemble anti-vibratoire du type indiqué cl-dessus dans lequel l'armature intérieure qui s'étend longitudinalement, dans une deuxième direction horizontale, entre une première extrémité située hors du caisson et une deuxième extrémité située dans le caisson est tel que la deuxième extrémité est apte à venir en butée contre le deuxième élément rigide pour limiter, dans un premier sens, le déplacement horizontal de l'armature intérieure par rapport à l'armature extérieure, et dans lequel le corps en élastomère coopère avec l'armature extérieure dans une zone affleurant sensiblement une face opposée au passage.

Grâce à cette disposition, l'armature intérieure est sensiblement horizontale et repose en partie sur l'armature extérieure dans une région proche de son (ou de ses) point(s) de fixation sur la caisse. Le point d'ancrage est donc situé à proximité de la caisse. On réduit ainsi au maximum l'effet de couple entre le point d'ancrage du moteur et la caisse. L'amplitude des vibrations, pour un même effort exercé par le moteur sur la caisse, est donc diminuée.

Dans le présent texte, le qualificatif - annulaire - ne correspond pas uniquement à une forme circulaire.

Dans des modes de réalisation préférés de l'invention, on a recours à l'une et/ou à l'autre des dispositions suivantes :
- le caisson comporte une paroi inférieure et une paroi supérieure, sensiblement perpendiculaires à la première direction, ainsi que deux parois latérales, s'étendant entre la paroi inférieure et la paroi supérieure, sensiblement perpendiculairement à une troisième direction, elle-même sensiblement perpendiculaire aux première et deuxième directions, chacune des parois latérales étant munie d'une nervure s'étendant dans la deuxième direction ;
- l'armature intérieure comporte deux rebords de butée latérale, chaque rebord de butée latérale s'étendant, dans le caisson, sur un bord longitudinal de l'armature intérieure, dans un plan sensiblement parallèle aux parois latérales, chaque rebord de butée latérale comportant une face externe, au moins en partie recouverte par le corps en élastomère, et chaque rebord de butée latérale limitant le déplacement de l'armature intérieure dans le caisson, dans l'un des deux sens opposés de la troisième direction ;
- le passage est entouré d'une cloison s'étendant dans un plan sensiblement perpendiculaire à la deuxième direction et l'armature intérieure comporte un épaulement s'étendant à partir d'au moins l'un des deux rebords de butée latérale, à proximité du passage, dans un plan perpendiculaire à la deuxième direction, cet épaulement étant apte à coopérer avec la cloison pour limiter le déplacement de l'armature intérieure dans le caisson, dans la deuxième direction, dans un deuxième sens opposé au premier sens, en retenant l'armature intérieure dans le caisson ;
- l'armature intérieure comporte, dans le caisson, un bossage ayant une convexité dirigée vers la paroi inférieure, ce bossage étant au moins en partie recouvert par le corps en élastomère limitant et amortissant les déplacements, vers le bas, de l'armature intérieure dans le caisson ;
- l'armature intérieure comporte, dans le caisson, une coupelle, destinée à coopérer avec l'armature extérieure, le corps en élastomère étant adhérisé à cette coupelle et cette coupelle comportant des bords calés entre la paroi inférieure et les nervures ;
- l'armature intérieure comporte, dans le caisson, un rebord de butée d'extrémité s'étendant au niveau de la deuxième extrémité de l'armature intérieure, dans un plan sensiblement parallèle à la première direction et sensiblement perpendiculaire à la deuxième direction, ce rebord de butée d'extrémité étant au moins en partie recouvert par le corps en élastomère ;
- l'ensemble anti-vibratoire est constitué d'une structure de véhicule automobile et d'un moteur, dans lequel le premier élément rigide est constitué par le moteur et le deuxième élément rigide est un longeron de la structure de véhicule automobile ; et
- le caisson est fermé, du côté opposé au passage, par le longeron sur lequel le caisson est fixé.

Selon un autre aspect, l'invention est un support anti-vibratoire pour réunir les deux éléments rigides d'un ensemble anti-vibratoire tel que mentionné ci-dessus et amortir des vibrations entre ces deux éléments.

Selon encore un autre aspect, l'invention est un véhicule automobile comportant un ensemble anti-vibratoire tel que mentionné ci-dessus.

Selon encore un autre aspect, l'invention est un procédé de montage d'un ensemble anti-vibratoire tel que mentionné ci-dessus, dans lequel on enfile l'armature interne dans le caisson en présentant la première extrémité de l'armature intérieure, et on ferme le caisson du côté opposé au passage en solidarisant l'armature extérieure au deuxième élément rigide, enfermant et retenant une partie de l'armature intérieure, cette partie étant celle sur laquelle est adhérisé le corps en élastomère.

D'autres aspects, buts et avantages de l'invention apparaitront à la lecture de la description détaillée qui suit d'un de ses modes de réalisation. L'invention sera également mieux comprise à l'aide des références aux dessins sur lesquels :
- la figure 1 représente schématiquement, en perspective , un support anti-vibratoire pour réunir deux éléments rigides d'un ensemble anti-vibratoire conforme à la présente invention ;
- la figure 2 représente schématiquement, en perspective, l'armature intérieure du support anti-vibratoire représenté sur la figure 1 ;
- la figure 3 représente schématiquement, en perspective partiellement arrachée, vu de dessus, un ensemble anti-vibratoire comprenant le support anti-vibratoire représenté à la figure 1 ;
- la figure 4 est une coupe schématique, selon un plan vertical, du support anti-vibratoire représenté à la figure 1 ;
- la figure 5 est une autre coupe schématique, selon un autre plan vertical du support anti-vibratoire représenté à la figure 1 ; et
- la figure 6 est encore une autre coupe schématique, selon encore un autre plan vertical du support anti-vibratoire représenté à la figure 1.

L'ensemble anti-vibratoire conforme à la présente invention, comporte un premier et un deuxième éléments rigides, ainsi qu'un support anti-vibratoire pour réunir ces deux éléments.

Dans le mode de réalisation de l'invention décrit ci-dessous, à titre d'exemple et de manière non limitative, en relation avec les figures, l'ensemble anti-vibratoire 1 comprend une structure de véhicule automobile et un moteur 2, dans lequel le premier élément rigide est constitué par le moteur 2 et le deuxième élément rigide est constitué par un longeron 3 de la structure du véhicule automobile.

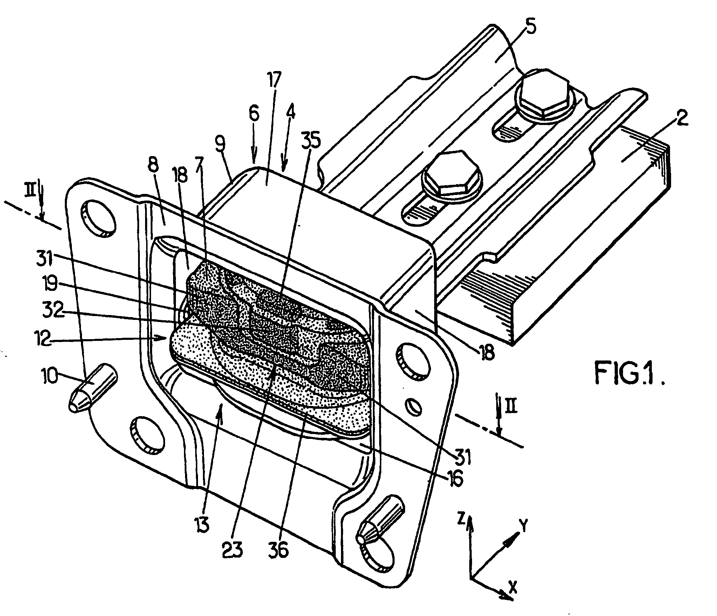

En référence à la figure 1, le support 4 anti-vibratoire comporte une armature intérieure 5 et une armature extérieure 6 rigides, en métal, ainsi qu'un corps en élastomère 7. Le support anti-vibratoire soutient le moteur 2 dans une direction verticale Z .

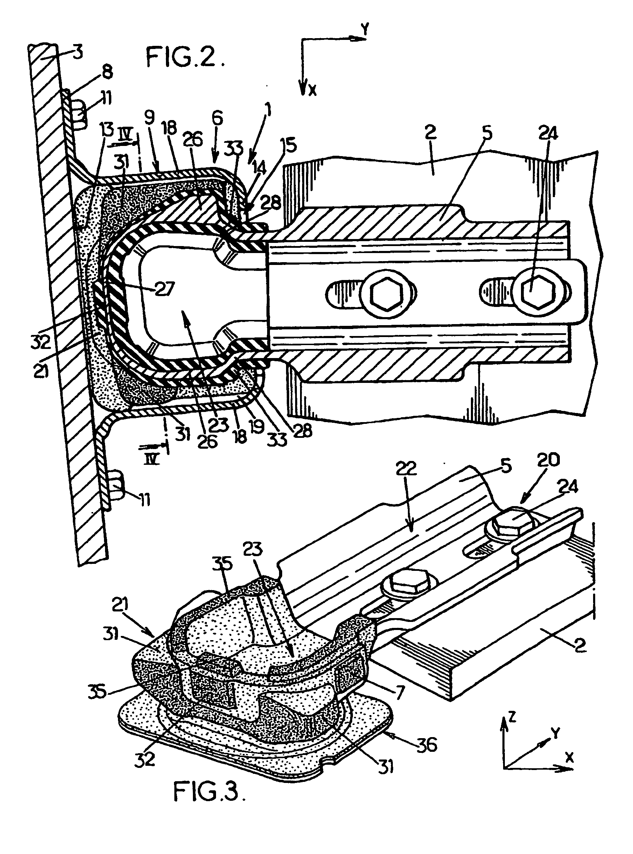

Comme représentée sur les figures 1 et 2, l'armature extérieure 6 comporte une plaque de fixation 8 et un caisson 9.

La plaque de fixation 8 s'étend dans un plan vertical parallèle à la direction verticale Z et à une direction horizontale X. Elle est destinée à être mise en place sur le longeron 3 grâce à des tétons 10 et fixée à celui-ci, d'une manière classique, grâce à des boulons 11. La plaque de fixation 8 comporte une ouverture 12 sensiblement rectangulaire.

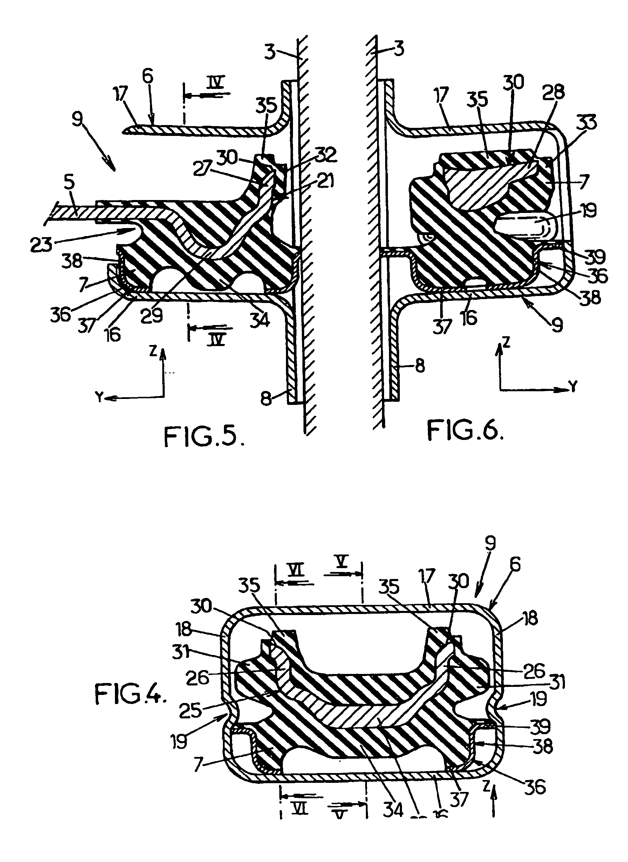

Le caisson 9 a une forme annulaire parallélépipédique. Il comporte une face ouverte 13 en correspondance de l'ouverture 12, ainsi qu'une cloison 14, parallèle à la face ouverte 13, opposée à cette dernière et comportant un passage 15 destiné à être traversé par l'armature intérieure 5. Il comporte également une paroi inférieure 16 et une paroi supérieure 17, sensiblement perpendiculaires à la direction Z, ainsi que deux parois latérales 18, s'étendant entre la paroi inférieure 16 et la paroi supérieure 17, sensiblement perpendiculairement à la direction X (voir également figure 4). Une nervure 19, en saillie vers l'intérieur du caisson 9, s'étend sensiblement au niveau des 2/5 inférieurs de chacune des parois latérales 18 et sensiblement longitudinalement dans une direction Y, perpendiculaire aux directions X et Z.

Comme représentée sur les figures 1, 2 et 3, l'armature intérieure 5 s'étend longitudinalement, dans la direction Y, entre une première extrémité 20 et une deuxième extrémité 21. L' armature intérieure 5 comporte une première partie 22 en forme de gorge, vers la première extrémité 20, et une deuxième partie 23 creuse et recouverte du corps en élastomère 7, vers la deuxième extrémité 21.

La première partie 22 est fixée, d'une manière classique, au moteur 2, par des boulons 24.

La deuxième partie 23 comporte un fond 25, deux rebords de butée latérale 26, un rebord de butée d'extrémité 27, deux épaulements 28 et un bossage 29 (voir également figures 4 à 6).

Chaque rebord de butée latérale 26 s'étend, à partir du fond 25 vers le bord supérieur 30 de la deuxième partie 23, dans un plan sensiblement parallèle aux parois latérales 18. Le rebord de butée d'extrémité 27 s'étend, à partir du fond 25 vers le bord supérieur 30 de la deuxième partie 23, entre les deux rebords de butée latérale 26, au niveau de la deuxième extrémité 21 de l'armature intérieure 23, dans un plan sensiblement perpendiculaire à la direction Y. Chaque épaulement 28 prolonge un rebord de butée latérale 26, vers l'intérieur du caisson 9, dans un plan perpendiculaire à la direction Y, au niveau de la jonction entre la première partie 22 et la deuxième partie 23 de l'armature intérieure 6. Chaque épaulement 28 s'étend à partir du fond 25 vers le bord supérieur 30 de la deuxième partie 23. Le bossage 29 est formé dans le fond 25 de la deuxième partie 23. Il présente une convexité dirigée vers la paroi inférieure 16.

Le corps en élastomère 7 recouvre entièrement la deuxième partie 23 à laquelle il est adhérisé. Il comporte des protubérances latérales 31, une protubérance d'extrémité 32, des protubérances d'épaulement 33, une protubérance inférieure 34 et une protubérance supérieure 35 correspondant à des surépaisseurs de matière de l'élastomère, respectivement au niveau de chaque rebord de butée latérale 26, du rebord de butée d'extrémité 27, de chaque épaulement 28, du bossage 29 et du bord supérieur 30 de la deuxième partie 23. Ces protubérances 31, 32, 33, 34, 35 s'étendent à partir du rebord de butée d'extrémité 27, de chaque rebord de butée latérale 26, de chaque épaulement 28 et du bossage 29, en direction du longeron 3, ou des parois 16, 17, 18 ou de la cloison 14 du caisson 9. Ces protubérances 31, 32, 33, 34, 35 amortissent les déplacements relatifs entre, respectivement, chaque rebord de butée latérale 26 et la paroi latérale 18 en regard, le rebord de butée d'extrémité 27 et le longeron 3, chaque épaulement 28 et la cloison 14, le bossage 29 et la paroi inférieure 16, ainsi que le bord supérieur 30 de la deuxième partie 23 et la paroi supérieure 17.

L'armature intérieure 5 comporte, en outre, une coupelle 38 destinée à coopérer avec l'armature extérieure 6. Cette coupelle 36 recouvre le dessous du corps en élastomère 7. Cette coupelle 36 comporte un fond 37, des flancs 38 et un bord 39.

Le fond 39 s'étend sensiblement parallèlement à la paroi inférieure 16. Il est ouvert en regard de la protubérance recouvrant le bossage 29. Les flancs 38 s'étendent en prolongement du fond 37, parallèlement respectivement aux parois latérales 26, au longeron 3 et à la cloison 14. Le bord 39 prolonge les flancs 38 parallèlement à la paroi inférieure 16.

La hauteur des flancs 38 est telle que le niveau supérieur du bord 39 est calé, au niveau des parois latérales 16, sous les nervures 19, tandis que le fond 37 est en appui sur la paroi intérieure 16.

L'armature intérieure 5 et l'armature extérieure 6 sont assemblées en introduisant en premier dans le caisson 9 la première partie 22. La coupelle 36 est ensuite emmanchée en force dans le caisson 9. Le caisson 9 est refermé en fixant la plaque de fixation 8 sur le longeron 3. Le longeron 3 obture alors la face ouverte 13. Cette disposition évite la fixation par vissage entre armature intérieure 5 et armature extérieure 6.

Grâce aux dispositions indiquées ci-dessus, et comme illustré par les figures 4, 5 et 6, il est possible de limiter des déplacements relatifs de l'armature intérieure et de l'armature extérieure, dans les deux sens des trois directions X , Y et Z.

La figure 4 montre que les déplacements de l'armature intérieure 5 par rapport à l'armature extérieure 6, dans les deux sens de la direction Z sont amortis par les protubérances supérieure 35 et inférieure 34, tandis que les déplacements, dans la direction X, de l'armature intérieure 5 vers les parois latérales 18, sont amortis par les protubérances latérales 31. L'architecture des butées latérales (protubérances latérales 31 par rapport aux parois latérales 18) permet une meilleure progressivité des limitations etun meilleur filtrage des vibrations sous couple dans le plan X-Y.

La figure 5 montre que tes déplacements de l'armature intérieure 5 par rapport à l'armature extérieure 6, dans les deux sens de la direction Z, sont amortis par les protubérances supérieure 38 et inférieure 34, tandis que le déplacement de l'armature intérieure 5 vers le longeron 3 est amorti, dans un premier sens de la direction Y, par la protubérance d'extrémité 32. Cette figure illustre également le fait que le corps en élastomère 7 coopère avec l'armature extérieure 6, par l'intermédiaire de la coupelle 36, dans une zone affleurant sensiblement la face ouverte 13, donc à proximité du longeron 3. Ainsi, le centre élastique du support anti-vibratoire 4 se trouve rapproché du longeron 3. Cette architecture permet de limiter les couples entre le moteur 2 et le longeron 3 et de diminuer l'amplitude des vibrations par rapport à ce que l'on observe, pour un même effort, dans les ensembles anti-vibratoires de l'art antérieur.

La figure 6 montre que les déplacements de l'armature intérieure 5 par rapport à l'armature extérieure 6, dans le deuxième sens de la direction Y, sont amortis par les protubérances d'épaulement 33.

L'invention ne se limite nullement au mode de réalisation présenté ci-dessus. Elle embrasse également de nombreuses variantes. Par exemple, le corps en élastomère peut être complété d'une cale hydraulique avec deux chambres remplies de liquide et séparées l'une de l'autre par un passage étranglé.

## Revendications

1. Ensemble anti-vibratoire comprenant des premier (2) et deuxième (3) éléments rigides et un support anti-vibratoire (4) pour réunir ces deux éléments (2,3), amortir des vibrations entre ces deux éléments (2,3) et supporter une charge (2) selon une première direction verticale (Z), le support (4) comportant lui-même :
- deux armatures rigides (5,6) respectivement intérieure et extérieure, adaptées pour être reliées respectivement avec les premier (2) et deuxième (3) éléments rigides, l'armature extérieure (6) formant un caisson (9) ayant une forme annulaire entourant l'armature intérieure (5) et comportant un passage (15) traversé par l'armature intérieure (5), et
- un corps en élastomère (7) assurant une liaison entre l'armature intérieure (5) et l'armature extérieure (6), l'armature intérieure (5) s'étend longitudinalement, dans une deuxième direction horizontale (Y), entre une première extrémité (20) située hors du caisson (9) et une deuxième extrémité (21) située dans le caisson (9) **caractérisé par le fait que**
ladite deuxième extrémité est apte à venir en butée contre le deuxième élément rigide (3) pour limiter, dans un premier sens, le déplacement horizontal de l'armature intérieure (5) par rapport à l'armature extérieure (6), et
**par le fait que** le corps en élastomère (7) coopère avec l'armature extérieure (6) dans une zone affleurant sensiblement une face (13) opposée au passage (15).

2. Ensemble anti-vibratoire selon la revendication 1, dans lequel le caisson (9) comporte une paroi inférieure (16) et une paroi supérieure (17), sensiblement perpendiculaires à la première direction (Z), ainsi que deux parois latérales (18), s'étendant entre la paroi inférieure (16) et la paroi supérieure (17), sensiblement perpendiculairement à une troisième direction (X), elle-même sensiblement perpendiculaire aux première (Z) et deuxième (Y) directions, chacune des parois latérales (18) étant munie d'une nervure (19) s'étendant dans la deuxième direction (Y).

3. Ensemble anti-vibratoire selon la revendication 2, dans lequel l'armature intérieure (5) comporte deux rebords de butée latérale (26), chaque rebord de butée latérale (26) s'étendant, dans le caisson (9), sur un bord longitudinal de l'armature intérieure (5), dans un plan sensiblement parallèle aux parois latérales (18), chaque rebord de butée latérale (26) comportant une face externe, au moins en partie recouverte par le corps en élastomère (7), et chaque rebord de butée latérale (26) limitant le déplacement de l'armature intérieure (5) dans le caisson (9), dans l'un des deux sens opposés de la troisième direction (X).

4. Ensemble anti-vibratoire selon la revendication 3, dans lequel le passage (15) est entouré d'une cloison (14) s'étendant dans un plan sensiblement perpendiculaire à la deuxième direction (Y) et l'armature intérieure (5) comporte un épaulement (28) s'étendant à partir d'au moins l'un des deux rebords de butée latérale (26), à proximité du passage (15), dans un plan perpendiculaire à la deuxième direction (Y), cet épaulement (28) étant apte à coopérer avec la cloison (14) pour limiter le déplacement de l'armature intérieure (5) dans le caisson (9), dans la deuxième direction (Y), dans un deuxième sens opposé au premier sens, en retenant l'armature intérieure (5) dans le caisson (9).

5. Ensemble anti-vibratoire selon l'une des revendications 2 à 4, dans lequel l'armature intérieure (5) comporte, dans le caisson (9), un bossage (29) ayant une convexité dirigée vers la paroi inférieure (16), ce bossage (29) étant au moins en partie recouvert par le corps en élastomère (7) limitant et amortissant les déplacements, vers le bas, de l'armature intérieure (5) dans le caisson (9).

6. Ensemble anti-vibratoire selon l'une des revendications 2 à 5, dans lequel l'armature intérieure (5) comporte, dans le caisson (9), une coupelle (36), destinée à coopérer avec l'armature extérieure (6), le corps en élastomère (7) étant adhérisé à cette coupelle (36) et cette coupelle (36) comportant des bords (39) calés entre la paroi inférieure (16) et les nervures (19).

7. Ensemble anti-vibratoire selon l'une des revendications précédentes, dans lequel l'armature intérieure (5) comporte, dans le caisson (9), un rebord de butée d'extrémité (27) s'étendant au niveau de la deuxième extrémité (21) de l'armature intérieure (5), dans un plan sensiblement parallèle à la première direction (Z) et sensiblement perpendiculaire à la deuxième direction (Y), ce rebord de butée d'extrémité (27) étant au moins en partie recouvert par le corps en élastomère (7).

8. Ensemble anti-vibratoire selon l'une des revendications précédentes, comprenant une structure de véhicule automobile et un moteur (2), dans lequel le premier élément rigide est constitué par le moteur (2) et le deuxième élément rigide est un longeron (3) de la structure de véhicule automobile.

9. Ensemble anti-vibratoire selon la revendication 8, dans lequel le caisson (9) est fermé, du côté opposé au passage (15), par le longeron (3) sur lequel le caisson (9) est fixé.

10. Support anti-vibratoire pour réunir les deux éléments rigides (2,3) d'un ensemble anti-vibratoire selon l'une des revendications précédentes et amortir des vibrations entre ces deux éléments (2,3).

11. Véhicule automobile comportant un ensemble anti-vibratoire selon l'une des revendications précédentes.

12. Procédé de montage d'un ensemble anti-vibratoire selon l'une des revendications 1 à 9, dans lequel on enfile l'armature interne (5) dans le caisson (9) en présentant en premier dans le caisson (9), la première extrémité (20) de l'armature intérieure (5), et on ferme le caisson (9) du côté opposé au passage (15) en solidarisant l'armature extérieure (6) au deuxième élément rigide (3), enfermant et retenant une partie (23) de l'armatura intérieure (5), cette partie (23) étant celle sur laquelle est adhérisé le corps en élastomère (7).

## Patentansprüche

1. Schwingungsdämpfende Anordnung mit einem ersten (2) und einem zweiten (3) steifen Element und einem schwingungsdämpfenden Träger (4) zum Verbinden dieser zwei Elemente (2, 3), Dämpfen von Schwingungen zwischen diesen zwei Elementen (2, 3) und Tragen einer Last (2) in einer ersten vertikalen Richtung (Z), wobei der Träger (4) seinerseits umfasst:
- zwei steife Gestelle (5, 6), jeweils ein inneres und ein äußeres, die eingerichtet sind, um jeweils mit dem ersten (2) bzw. zweiten (3) steifen Element verbunden zu werden, wobei das äußere Gestell (6) einen Kasten (9) von ringartiger Form bildet, der das innere Gestell (5) umgibt und einen von dem inneren Gestell (5) durchquerten Durchgang (15) aufweist, und
- einen Elastomerkörper (7), der eine Verbindung zwischen dem inneren Gestell (5) und dem äußeren Gestell (6) herstellt,
wobei das innere Gestell sich longitudinal in einer zweiten, horizontalen Richtung (Y) zwischen einem außerhalb des Kastens (9) befindlichen ersten Ende (20) und einem in dem Kasten (9) befindlichen zweiten Ende (21) erstreckt, **dadurch gekennzeichnet, dass** das zweite Ende in der Lage ist, gegen das zweite steife Element (3) anzuschlagen, um in einem ersten Sinn die horizontale Verschiebung des inneren Gestells (5) in Bezug auf das äußere Gestell (6) zu begrenzen, und dass der Elastomerkörper (7) mit dem äußeren Gestell (6) in einer Zone zusammenwirkt, die im Wesentlichen eine dem Durchgang (15) gegenüberliegende Seite (13) berührt.

2. Schwingungsdämpfende Anordnung nach Anspruch 1, bei der der Kasten (9) eine untere Wand (16) und eine obere Wand (17), die im wesentlichen senkrecht zu der ersten Richtung (Z) sind, sowie zwei Seitenwände (18) aufweist, die sich zwischen der unteren Wand (16) und der oberen Wand (17) im wesentlichen senkrecht zu einer dritten Richtung (X) erstrecken, die ihrerseits im wesentlichen senkrecht zu der ersten (Z) und der zweiten (Y) Richtung ist, wobei jede der Seitenwände (18) mit einer sich in der zweiten Richtung (Y) erstreckenden Rippe (19) versehen ist.

3. Schwingungsdämpfende Anordnung nach Anspruch 2, bei der das innere Gestell (5) zwei seitliche Anschlagkanten (26) aufweist, wobei sich jede seitliche Anschlagkante (26) in dem Kasten (9) an einem Längsrand des inneren Gestells (5) in einer zu den Seitenwänden (18) im wesentlichen parallelen Ebene erstreckt, jede seitliche Anschlagkante (26) eine wenigstens teilweise von dem Elastomerkörper (7) überdeckte Außenseite aufweist und jede seitliche Anschlagkante (26) die Verschiebung des inneren Gestells (5) in dem Kasten (9) in einen der zwei entgegengesetzten Sinne der dritten Richtung (X) begrenzt.

4. Schwingungsdämpfende Anordnung nach Anspruch 3, bei der der Durchgang (15) von einer Trennwand (14) umgeben ist, die sich in einer zu der zweiten Richtung (Y) im wesentlichen senkrechten Ebene erstreckt, und das innere Gestell (5) eine Schulter (28) aufweist, die sich von wenigstens einer der zwei seitlichen Anschlagkanten (26) aus in der Nähe des Durchgangs (15) in einer zu der zweiten Richtung (Y) senkrechten Ebene erstreckt, wobei diese Schulter (28) in der Lage ist, mit der Trennwand (14) zusammenzuwirken, um die Verschiebung des inneren Gestells (5) in dem Kasten (9) in der zweiten Richtung (Y) in einem zu dem ersten Sinn entgegengesetzten zweiten Sinn durch Zurückhalten des inneren Gestells (5) in dem Kasten (9) zu begrenzen.

5. Schwingungsdämpfende Anordnung nach einem der Ansprüche 2 bis 4, bei der das innere Gestell (5) in dem Kasten (9) einen Vorsprung (29) aufweist, der eine der unteren Wand (16) zugewandte Konvexität aufweist, wobei dieser Vorsprung (29) wenigstens teilweise von dem die Verschiebungen nach unten des inneren Gestells (5) in dem Kasten (9) begrenzenden und dämpfenden Elastomerkörper (7) bedeckt ist.

6. Schwingungsdämpfende Anordnung nach einem der Ansprüche 2 bis 5, bei der das innere Gestell (5) in dem Kasten (9) einen Tiegel (36) aufweist, der vorgesehen ist, um mit dem äußeren Gestell (6) zusammenzuwirken, wobei der Elastomerkörper (7) an diesem Tiegel (36) griffig gemacht ist und der Tiegel (26) zwischen die untere Wand (16) und die Rippen (19) geklemmte Ränder (39) aufweist.

7. Schwingungsdämpfende Anordnung nach einem der vorhergehenden Ansprüche, bei der das innere Gestell (5) in dem Kasten (9) eine Endanschlagkante (27) aufweist, die sich in Höhe des zweiten Endes (21) des inneren Gestells (5) in einer zu der ersten Richtung (Z) im wesentlichen parallelen und zu der zweiten Richtung (Y) im wesentlichen senkrechten Ebene erstreckt, wobei diese Endanschlagkante (27) wenigstens teilweise von dem Elastomerkörper (7) bedeckt ist.

8. Schwingungsdämpfende Anordnung nach einem der vorhergehenden Ansprüche, die eine Kraftfahrzeugstruktur und einen Motor (2) umfasst, wobei das erste steife Element durch den Motor gebildet ist und das zweite steife Element ein Träger (3) der Kraftfahrzeugstruktur ist.

9. Schwingungsdämpfende Anordnung nach Anspruch 8, bei der der Kasten (9) auf der dem Durchgang (15) gegenüberliegenden Seite durch den Träger (3) verschlossen ist, an dem der Kasten (9) befestigt ist.

10. Schwingungsdämpfender Träger zum Verbinden der zwei steifen Elemente (2, 3) einer schwingungsdämpfenden Anordnung nach einem der vorhergehenden Ansprüche und zum Dämpfen der Schwingungen zwischen diesen zwei Elementen (2, 3).

11. Kraftfahrzeug mit einer schwingungsdämpfenden Anordnung nach einem der vorhergehenden Ansprüche.

12. Verfahren zum Montieren einer schwingungsdämpfenden Anordnung nach einem der Ansprüche 1 bis 9, bei der das innere Gestell (5) in den Kasten (9) eingeführt wird, indem zuerst in dem Kasten (9) das erste Ende (20) des inneren Gestells (5) dargeboten wird und der Kasten (9) auf der dem Durchgang (15) gegenüberliegenden Seite verschlossen wird durch Verbinden des äußeren Gestells (6) mit dem zweiten steifen Element (3), wodurch ein Teil (23) des inneren Gestells (5) eingeschlossen und zurückgehalten wird, wobei dieser Teil (23) derjenige ist, an welchem der Elastomerkörper (7) griffig gemacht ist.

## Claims

1. Anti-vibration assembly comprising first (2) and second (3) rigid elements and an anti-vibration support (4) for connecting these two elements (2,3) damping vibration between these two elements and supporting a load in a vertical first direction (Z), the support itself comprising:
two rigid armatures (5,6), an inner and an outer one respectively, which are designed to be connected respectively to the first (2) and second (3) rigid elements, the outer armature (5) forming a casing (9) of annular shape surrounding the inner armature (5) and having a passage (15) through which the inner armature passes and,
an elastomer body (7) providing a connection between the inner armature (5) and the outer armature (6),
the inner armature running longitudinally in a horizontal second direction (Y) between a first end (20) situated outside the casing and a second end (21) situated inside the casing **characterized in that** said second end is able to come into abutment against the second rigid element to limit, in a first way, the horizontal movement of the inner armature (5) with respect to the outer armature (6) and
the elastomer body collaborates with the outer armature in a region roughly flush with a face opposite the passage.

2. Anti-vibration assembly according to claim 1, in which the casing (9) comprises a lower wall (16) and an upper wall (17) which are roughly perpendicular to the first direction (Z) and two side walls (18) running between the lower wall (16) and the upper wall (17) roughly perpendicular to a third direction (X) which is itself roughly perpendicular to the first (Z) and second directions (Y), each of the side walls (18) having a rib (19) running in the second direction (Y).

3. Anti-vibration assembly according to claim 2, in which the inner armature (5) has two lateral stop rims (26), each lateral stop rim (26) running, in the casing, along a longitudinal edge of the inner armature (5) in a plane roughly parallel to the side walls (18) each lateral stop rim (26) comprising an external face, at least partly covered by the elastomer body (7), and each lateral stop rim (26) limiting the movement of the inner armature (5) in the casing (9) in one of the two opposite ways of the third direction (X).

4. Anti-vibration assembly according to claim 3, in which the passage (15) is surrounded by a partition (14) running in a plane roughly perpendicular to the second direction (Y) and the inner armature (5) comprises a shoulder (28) running from at least one of the two lateral stop rims (26) near the passage (15) in a plane perpendicular to the second direction (Y), this shoulder (28) being able to collaborate with the partition (14) to limit the movement of the inner armature (5) in the casing (9) in the second direction (Y) in a second way which is the opposite of the first way, while retaining the inner armature (5) in the casing (9).

5. Anti-vibration assembly according to any one of claims 2 to 4, in which the inner armature (5) comprises, in the casing (9), a boss (29) which has a convexness facing towards the lower wall (16), this boss (29) being at least partly covered by the elastomer body (7) limiting and damping the movements, downwards, of the inner armature (5) in the casing (9).

6. Anti-vibration assembly according to any one of claims 2 to 5, in which the inner armature (5) comprises, in the casing (9), a cup (36), intended to collaborate with the outer armature (6), the elastomer body (7) being bonded to this cup (36) and this cup (36) having edges (39) wedged between the lower wall (16) and the ribs (19).

7. Anti-vibration assembly according to any one of the preceeding claims, in which the inner armature (5) comprises, in the casing (9), an end stop rim (27) running, at the second end (21) of the inner armature (5), in a plane roughly parallel to the first direction (Z) and roughly perpendicular to the second direction (Y), this end stop rim (27) being at least partly covered by the elastomer body (7).

8. Anti-vibration assembly according to any one of the preceeding claims, comprising a structure of a motor vehicle and an engine (2), in which assembly the first rigid element consists of the engine (2) and the second rigid element is a beam (3) of the structure of the motor vehicle.

9. Anti-vibration assembly according to claim 8, in which the casing (9) is closed, on the opposite side to the passage (15) by the beam (3) to which the casing (9) is fixed.

10. Anti-vibration support for connecting the two rigid elements (2, 3) of an anti-vibration assembly according to any one of the preceeding claims and damping the vibration between these two elements (2, 3).

11. Motor vehicle comprising an anti-vibration assembly according to any one of the preceeding claims.

12. Method of mounting an anti-vibration assembly according to any one of claims 1 to 9, in which the inner armature (5) is slipped into the casing (9) by first of all offering up into the casing (9) the first end (20) of the inner armature, and the casing is closed on the opposite side to the passage by securing the outer armature (6) to the second rigid element (3), enclosing and retaining part of the inner armature (5), this part (23) being the one to which the elastomer body (7) is bonded.
